# FASCICULE DE BREVET EUROPEEN

(11) **EP 0 296 042 B1**
(45) Date de publication et mention de la délivrance du brevet: **23.03.1994**
(21) Numéro de dépôt: 88401446.5
(22) Date de dépôt: 13.06.1988
(51) Int. Cl.: B32B 17/10, C08J 7/18, C08F 283/00

(54) **Couche adhésive utilisée dans la fabrication de vitrages feuilletés, procédé de fabrication et vitrages feuilletés comprenant une telle couche**
Klebstoffschicht für die Herstellung von geschichtetem Glas, Verfahren für die Herstellung von geschichtetem Glas mit einer solchen Schicht
Adhesive coating used in the manufacturing of layered glass and manufacturing process of layered glass containing this coating

(30) Priorité: 16.06.1987 FR 8708345
(43) Date de publication de la demande: 21.12.1988
(73) Titulaire: SAINT-GOBAIN VITRAGE INTERNATIONAL, 92400 Courbevoie (FR)
(72) Inventeur: Arribart, Hervé, F-95230 Soisy sous Montmorency (FR); Chartier, Pascal, F-75015 Paris (FR)
(74) Mandataire: Muller, René

(56) Documents cités:
- EP-A- 0 035 130
- EP-A- 0 077 227
- EP-A- 0 160 510
- CH-A- 560 594
- DE-A- 2 031 706
- GB-A- 2 025 433
- US-A- 3 488 268
- US-A- 4 018 939
- BASE DE DONNEES WPIL, accession no. 81-50891D [28], Derwent Publications Ltd, Londres, GB; & JP-A-56 062 147

## Description

La présente invention concerne la fabrication de vitrages feuilletés en verre et/ou en matière plastique tels des vitrages feuilletés de grandes dimensions comme des vitrages automobiles, de bâtiments et de plus petites dimensions tels les masques, écrans, lunettes, etc... Plus particulièrement, l'invention concerne une nouvelle couche adhésive utilisée dans la fabrication de tels vitrages feuilletés. Elle concerne encore les vitrages feuilletés comprenant cette couche adhésive.

L'utilisation d'une couche de polyuréthane par exemple en tant que couche adhésive dans les vitrages feuilletés est connue et décrite dans de nombreuses publications de brevets. Cette couche peut remplir la seule fonction de collage. Elle peut tenir en outre un rôle d'absorbeur d'énergie.

Cette couche adhésive peut être utilisée pour assembler des feuilles de substances diverses en verre et/ou en matières plastiques.

Selon les éléments à assembler et les utilisations envisagées pour les vitrages feuilletés on est amené à avoir une adhésion plus ou moins forte entre les éléments à assembler et la couche intercalaire. Lorsqu'on désire une adhésion forte, il est généralement nécessaire de traiter les éléments à assembler à l'aide de primaire, afin d'augmenter l'adhésion naturelle de la couche de polyuréthane avec les feuilles de verre ou de matière plastique.

Trouver un primaire convenable n'est pas aisé et lorsqu'il est trouvé, il ne s'applique généralement qu'à une couche de polyuréthane bien spécifique.

Des problèmes d'adhésion peuvent aussi de poser pour d'autres couches intercalaires pour vitrage feuilleté, en particulier pour des couches intercalaires en chlorure de polyvinyle (PVC) ou pour des couches en polyvinylbutyral (PVB).

Ainsi le chlorure de polyvinyle transparent de haute qualité optique pourrait être utilisé avec avantage en tant que couche intercalaire dans les vitrages feuilletés car il présente des propriétés d'absorbeur d'énergie satisfaisantes, et son coût est réduit. Il n'est cependant généralement pas utilisé car ses propriétés adhésives sont très faibles ou nulles.

Le document GB-A-2 025 433 décrit le traitement de la surface d'un substrat polymérique pour greffage d'une composition photopolymérisable par irradiation actinique.

Le document US-A- 4 256 782 décrit également un greffage d'une composition polymérisable par irradiation actinique.

Ces deux documents n'envisagent pas le greffage de monomères insaturés sur une couche adhésive pour un vitrage feuilleté, par un rayonnement qui évite la polymérisation des monomères

L'invention propose un vitrage feuilleté de sécurité comprenant une couche adhésive qui présente d'excellentes propriétés d'adhésion avec les feuilles de verre et/ou de matière plastique composant les vitrages feuilletés.

La couche adhésive du vitrage selon l'invention est une couche en matière plastique choisie notamment parmi le polyuréthane, le chlorure de polyvinyle, le polyvinylbutyral, qui comporte, greffés radiochimiquement sur au moins une de ses faces, la ou les faces destinées à être au contact avec les autres éléments du vitrage feuilleté, des monomères et/ou des oligomères d'un monomère insaturé ou de sels de ce monomère.

Un monomère insaturé convenable est notamment un monomère acrylique ou méthacrylique tels l'acide acrylique, l'acide méthacrylique, l'acide maléique, l'acide fumarique, l'acrylamide, l'acrylonitrile, le méthacrylonitrile, les silanes à groupement acrylique ou méthacrylique, etc ...

De très bons résultats sont obtenus notamment avec l'acide acrylique, le méthacryloxypropyltriméthoxysilane.

La présence de monomères et/ou d'oligomères d'un monomère insaturé tel l'acide acrylique ou de sels de cet acide à la surface de la couche de matière plastique rend cette surface très hydrophile et ses propriétés d'adhésion s'en trouvent améliorées.

Un des problèmes rencontrés dans l'obtention de la couche de matière plastique greffée de monomères ou d'oligomères de l'acide acrylique par exemple ou de sels de cet acide, est d'éviter la formation d'un polymère acrylique, en particulier d'un homopolymère d'acide acrylique à la surface de la couche de matière plastique qui détruirait au moins partiellement les bonnes propriétés d'adhésion de ladite couche. Le procédé de greffage selon l'invention, décrit par la suite, résout ce problème.

L'invention s'applique en particulier à des couches thermoplastiques présentant des propriétés d'absorbeur d'énergie, notamment en polyuréthane thermoplastique, en PVC, en PVB. Elle peut aussi s'appliquer à des couches de polyuréthane obtenues par coulée réactive à température élevée, de l'ordre de 100 à 140°C, d'un mélange d'un composant polyol et d'un composant isocyanate, ce procédé d'obtention procurant des réactions de ramification. De telles couches sont décrites par exemple dans la publication de brevet européen 0 133 090.

Les couches adhésives selon l'invention peuvent être utilisées en tant que couches intercalaires entre deux feuilles de verre et/ou de matière plastique, leurs deux faces sont alors généralement greffées selon l'invention; elles peuvent lorsqu'il s'agit d'un polyuréthane obtenu par coulée réactive comme décrit ci-dessus, être aussi utlisées en tant que couche externe dans un vitrage asymétrique, en étant éventuellement traitée en surface afin d'en améliorer la résistance à la rayure et à l'abrasion. Bien entendu, dans ce cas, seule la face au contact du substrat est greffée selon l'invention.

La couche adhésive lorsqu'elle est en polyuréthane est généralement formée à partir d'un composant isocyanate choisi parmi les isocyanates aliphatiques, cycloaliphatiques, aliphatiques-aromatiques non sensibles à la lumière et pouvant contenir des fonctions urées ou encore des biurets d'isocyanate, et d'un composant polyol comprenant au moins un polyol choisi parmi les polyétherpolyols ou les polyesterpolyols de masse moléculaire comprise entre 450 et 2000, les polycaprolactones de masse moléculaire comprise entre 500 et 2000, des polycarbonatepolyols et polyesterpolycarbonatepolyols de masse moléculaire comprise entre 1000 et 2000, des polybutadiènes à fonction hydroxyle ou carboxyle, associé le cas échéant à au moins un diol court de masse moléculaire comprise entre 50 et 200.

On peut utiliser en particulier en tant qu'isocyanate par exemple les isocyanates difonctionnels aliphatiques comme le 1,6-hexanediisocyanate, le 2,2,4-triméthyl-1,6-hexanediisocyanate, le 2,4-4-triméthyl-1,6-hexanediisocyanate, le 1,3-bis (isocyanatométhyl) benzène, le bis-(4-isocyanatocyclohexyl)méthane, le bis-(3-méthyl-4-isocyanatocyclohexyl)méthane, le 2,2-bis-(4-isocyanatocyclohexyl) propane et le 3-isocyanatométhyl-3,5,5-triméthylcyclohexylisocyanate, le p-phénylénediisocyanate et p-cyclohexyldiisocyanate.

On utilise par exemple en tant que polyols des polyols obtenus par réaction d'alcools polyfonctionnels avec des diacides aliphatiques ou des éthers cycliques. Les alcools polyfonctionnels sont par exemple le 1,2-éthanediol (éthylèneglycol), le 1,2-propanediol, le 1,3-propanediol, le 1,2-butanediol, le 1,4-butanediol, le 2,2-diméthyl-1,3-propanediol (néopentylglycol), le 1,6-hexanediol, le 2-méthyl-2,4-pentanediol, le 3-méthyl-2,4-pentanediol, le 2-éthyl-1,3-hexanediol, le 2,2,4-triméthyl-1,3-pentanediol, le diéthylèneglycol, le triéthylèneglycol, les polyéthylèneglycols, le dipropylèneglycol, le tripropylèneglycol, les polypropylèneglycols ou le 2,2-bis (hydroxyméthyl)1-1-propanol (triméthyloléthane), le 2,2-bis (hydroxyméthyl)-1-butanol (triméthylolpropane), le 1,2,4-butanetriol, le 1,2,6-hexanetriol, le 2,2-bis (hydroxyméthyl)-1,3-propanediol (pentaérythritol) et le 1,2,3,4,5,6-hexanehexol (sorbitol), le cyclohexanediméthanol.

Les diacides aliphatiques sont par exemple l'acide malonique, l'acide succinique, l'acide glutarique, l'acide adipique, l'acide subérique, et l'acide sébacique.

Le composant polyol peut encore comprendre le cas échéant un agent réticulant de fonctionnalité supérieure à 2 tel un triol de masse moléculaire comprise entre 100 et 3000.

Lorsque la couche adhésive est une couche intercalaire en chlorure de polyvinyle (PVC), un PVC convenable est un PVC de haute qualité optique, dénommé PVC cristal.

L'invention concerne également un procédé pour la formation d'une couche de matière plastique présentant des propriétés d'adhésion améliorées.

Selon le procédé, on greffe de l'acide acrylique sur au moins une des faces de la couche de matière plastique par greffage radiochimique mettant en jeu un bombardement d'électrons. L'irradiation de la couche superficielle de la matière plastique lorsqu'il s'agit de polyuréthane par exemple provoque notamment la rupture de chaines du polyuréthane et la formation de radicaux dont une partie peut ainsi réagir avec l'acide acrylique.

De préférence, le procédé radiochimique utilise un bombardement d'électrons afin de limiter l'action du rayonnement à la couche superficielle de la matière plastique. On s'est aperçu en effet, qu'un rayonnement par rayons X trop énergétique altérait les propriétés mécaniques de la couche de matière plastique notamment lorsqu'il s'agit de polyuréthane et qu'en outre, il provoquait une homopolymérisation très rapide du monomère insaturé, notamment de l'acide acrylique.

Un procédé préféré pour le greffage consiste à utiliser un rayonnement électronique de faible énergie dont la pénétration dans la couche de matière plastique est limitée à environ 100 à 150 µm.

En outre, pour éviter une pénétration trop rapide du monomère insaturé, notamment de l'acide acrylique lors de son dépôt sur la couche de matière plastique, de préférence on utilise une solution aqueuse dont la teneur en monomère est inférieure à 20 % en poids et de préférence inférieure à 10 % en poids.

La dilution du monomère insaturé dans de l'eau présente aussi l'avantage de limiter la réaction d'homopolymérisation du monomère, notamment de l'acide acrylique lors de l'irradiation au cas où cette irradiation suit le dépôt de la solution aqueuse du monomère sur la couche de matière plastique.

La couche de matière plastique peut être irradiée au préalable, puis mise en présence de la solution aqueuse du monomère insaturé.

De préférence, on dépose d'abord la solution aqueuse du monomère insaturé sur la couche de matière plastique et la couche ainsi couverte est soumise à un rayonnement de faible énergie, avantageusement à un rayonnement électronique de faible énergie pour les raisons évoquées précédemment.

Lorsque la couche de matière plastique a été irradiée et qu'elle comporte essentiellement à sa surface des monomères et oligomères du monomère insaturé, par exemple de l'acide acrylique, on peut lui faire subir avantageusement un traitement ultérieur par action d'une base telle que la soude ou la potasse, afin de transformer les groupes acides en carboxylates dont le caractère hydrophile est plus accentué et qui présentent par conséquent des propriétés d'adhésion encore améliorées.

D'autres avantages et caractéristiques de l'invention apparaitront dans la description suivante d'exemples de couches de matière plastique conformes à l'invention.

### EXEMPLE 1

Sur une feuille de polyétheruréthane formée à partir d'un polytétraméthylène glycol de masse moléculaire d'environ 3200 (60 % en poids) et de diisocyanatodicyclohexylméthane (40 % en poids), on dépose une solution aqueuse à 5 % d'acide acrylique et contenant un tensio actif à raison de 0,5 % en poids. On dépose ainsi environ 0,5 g de solution pour 100 cm² de surface à traiter.

La feuille de polyuréthane est ensuite soumise à un rayonnement électronique fonctionnant sous 170 kV et 1,8 mA. La dose reçue est d'environ 1 Mrad.

La dose est la quantité d'énergie transférée à la matière qui s'exprime en unités d'énergie par unités de masse du matériau irradié (1 rad = 6,25.10³ eV/g).

On opère de la même façon sur l'autre face de la feuille.

Après irradiation, la feuille est trempée dans une solution de soude à 1 % afin de transformer les groupes acides en carboxylates de sodium.

La feuille est utilisée en tant qu'intercalaire de deux feuilles de verre : le vitrage finalement obtenu présente une adhésion verre-polyuréthane élevée et fortement améliorée par rapport à l'adhésion sans traitement, comme montré dans l'exemple témoin 1.

Les valeurs d'adhésion sont mesurées par la méthode du test de pelage qui consiste à exercer, sur une bande de 1 cm de large de la feuille de polyuréthane, une traction perpendiculaire à la surface du vitrage avec une vitesse de traction de 5 cm par minute, à une température de 20°C. On note la force de traction moyenne. Elle est ici de 10 daN environ.

### EXEMPLE TEMOIN 1

La feuille de polyuréthane de l'exemple 1, non traitée selon l'invention par l'acide acrylique est assemblée sans utilisation d'un primaire avec deux feuilles de verre.

L'adhésion mesurée verre-polyuréthane est très faible et inférieure à 0,1 daN.

### EXEMPLE TEMOIN 2

La feuille de polyuréthane de l'exemple 1 non traitée selon l'invention par l'acide acrylique, mais avec un primaire de façon connue, à savoir du γ-aminopropyltriéthoxysilane.

L'adhésion mesurée de 15 daN environ est comparable à celle obtenue avec le polyuréthane traité selon l'exemple 1.

### EXEMPLE 2

La feuille de polyuréthane greffée et traitée selon l'exemple 1 est utilisée en tant qu'intercalaire d'un vitrage verre-polyuréthanepolycarbonate.

L'adhésion mesurée polycarbonate-polyuréthane est élevée.

### EXEMPLE 3

La feuille de polyuréthane greffée et traitée selon l'exemple 1 est utilisée en tant qu'intercalaire d'un vitrage feuilleté, formé de deux feuilles de polyméthacrylate de méthyle (PMMA) et de ladite couche intercalaire.

La valeur d'adhésion mesurée PMMA-PU est plus élevée qu'avec la feuille de polyuréthane non traitée.

### EXEMPLE 4

On prépare un vitrage de la même manière que dans l'exemple 1.

Sur la feuille de polyuréthane, on dépose une solution aqueuse à 10 % d'acide acrylique, à raison de 0,5 g de solution pour 100 cm² de surface à traiter.

La feuille de polyuréthane est ensuite soumise à un rayonnement électronique fonctionnant sous 170 kV et 1,7 mA, en en présence d'oxygène afin d'inhiber la réaction d'homopolymérisation de l'acide acrylique. La dose absorbée est de 1 Mrad.

Utilisée en tant qu'intercalaire entre deux feuilles de verre, la feuille de polyuréthane traitée montre des propriétés d'adhésion élevées.

### EXEMPLE 5

Sur une feuille de polyesteruréthane formée à partir d'un polycaprolactonediol et de diisocyanatodicyclohexylméthane, on dépose une solution aqueuse à 5 % d'acide acrylique à raison d'environ 0,5 g de solution pour 100 cm² de surface à traiter.

La feuille est soumise au même traitement que dans l'exemple 1, puis elle est assemblée aux deux feuilles de verre.

L'adhésion verre-polyuréthane est améliorée par rapport à la valeur obtenue selon l'exemple témoin 3.

### EXEMPLE TEMOIN 3

La feuille de polyuréthane de l'exemple 5 est utilisée non traitée selon l'invention pour l'assemblage de deux feuilles de verre.

L'adhésion verre-PU est plus faible qu'avec la feuille de polyuréthane traitée radiochimiquement.

### EXEMPLE 6

Une couche de polyuréthane obtenue par coulée réactive comme décrit dans la publication de brevet européen EP-A-0 133 090 d'un mélange d'un composant polyol formé de polytétraméthylèneglycol de masse moléculaire 1000, de butanediol-1,4- de polycaprolactonetriol, et d'un composant isocyanate formé de 3-isocyanatométhyl-3,5,5-triméthyl-cyclohexylisocyanate (IPDI) présentant des fonctions urées, est traitée comme dans l'exemple 1 sur une seule de ses faces.

Elle est associée à une feuille de verre, la face greffée étant orientée vers le verre. L'adhésion mesurée est améliorée par rapport à l'adhésion obtenue sans traitement.

Le traitement selon l'invention d'une couche de polyuréthane procure des adhésions comparables à celles obtenues avec des primaires d'adhésion, et permet le cas échéant leur suppression.

### EXEMPLE 7

Une feuille de chlorure de polyvinyl (PVC) cristal est traitée de la même façon que dans l'exemple 1, par dépêt d'une solution aqueuse d'acide acrylique suivi d'une irradiation par un rayonnement électronique.

La feuille de PVC traitée est utilisée comme intercalaire entre deux feuilles de verre.

L'adhésion mesurée verre-PVC traité est de 0.8 daN alors qu'elle est nulle pour un PVC non traité.

### EXEMPLE 8

On opère sur une feuille de PVC cristal comme dans l'exemple 7, mais par dépôt d'une solution aqueuse à 2 % de méthacryloxypropyltriméthoxysilane suivi d'une irradiation par un rayonnement électronique. La dose reçue par chaque face est d'environ 8 Mrad. La feuille de PVC traitée est utilisée comme intercalaire entre deux feuilles de verre. L'adhésion mesurée verre-PVC traité est de 0,5 daN.

### EXEMPLE 9

Une feuille de polyvinylbutyral de qualité automobile, c'est-à-dire utilisable dans les vitrages feuilletés pour véhicule à moteur, est traitée de la même façon que dans l'exemple 1, par dépôt d'une solution aqueuse d'acide acrylique à 2 % en poids suivi d'une irradiation par un rayonnement électronique. La dose reçue est de 16 Mrad. Après un rinçage à l'eau, la feuille est assemblée avec deux feuilles de verre et l'ensemble est soumis à un cycle d'autoclave de 1 heure à 140°C sous 12 bars de pression. L'adhésion mesurée verre-PVB traité est de 1,6 daN par cm. Cette adhésion est de 0,4 daN seulement lorsqu'on utilise un PVB non traité.

## Revendications

1. Vitrage feuilleté formé de feuilles de verre et/ou de matière plastique caractérisé en ce qu'il comprend une couche adhésive en matière plastique, en tant que couche intercalaire ou en tant que couche externe, cette couche adhésive comportant greffés radiochimiquement par un bombardement électronique sur au moins une de ses faces, des monomères insaturés et/ou des oligomères d'un monomère insaturé ou de sels de ce monomère.

2. Vitrage feuilleté selon la revendication 1, caractérisé en ce que le monomère insaturé est choisi parmi les monomères acryliques et les monomères méthacryliques.

3. Vitrage feuilleté selon la revendication 2, caractérisé en ce que le monomère insaturé est choisi parmi l'acide acrylique, l'acide méthacrylque, l'acide maléique, l'acide fumarique, l'acrylamide, l'acrylonitrile, le méthacrylonitrile, les silanes à groupement acrylque ou méthacrylique.

4. Vitrage feuilleté selon la revendication 3, caractérisé en ce que le monomère insaturé est choisi parmi l'acide acrylique et le méthacycryloxypropyltriméthoxysilane.

5. Vitrage feuilleté selon la revendication 4, caractérisé en ce que le monomère insaturé est l'acide acrylique.

6. Vitrage feuilleté selon une des revendications 1 à 5, caractérisé en ce que la couche adhésive présente des propriétés d'absorbeur d'énergie et qu'elle est choisie parmi le polyuréthane, le polyvinylbutyral, le chlorure de polyvinyle.

7. Vitrage feuilleté selon la revendication 6, caractérisée en ce que la couche adhésive est une couche intercalaire de polyuréthane.

8. Vitrage feuilleté selon une des revendications 1 à 6, caractérisé en ce que la couche adhésive est une couche de polyuréthane obtenue par coulée réactive d'un mélange d'un composant isocyanate et d'un composant polyol.

9. Vitrage feuilleté selon une des revendications 1 à 8, caractérisé en ce que le monomère insaturé est greffé par un bombardement électronique de faible énergie.

10. Vitrage feuilleté selon la revendication 9, caractérisé en ce que le greffage du monomère insaturé s'effectue après la mise en présence de la couche de matière plastique avec le monomère insaturé par dépôt sur la couche de matière plastique d'une solution aqueuse dont la teneur en monomère insaturé est inférieure à 20 % et de préférence inférieure à 10 % en poids.

11. Vitrage feuilleté selon une des revendications 9 à 10, caractérisé en ce qu'après greffage du monomère insaturé ou d'oligomères de ce monomère à la surface de la couche de matière plastique, on transforme les groupes acides en groupes carboxylates par action d'une base.

## Claims

1. Laminated pane, composed of sheets of glass and/or plastics material, characterized in that it comprises an adhesive film of plastics material as intermediate film or as external film, this adhesive film possessing, radiochemically grafted by electron bombardment onto at least one of its faces, unsaturated monomers and/or oligomers of an unsaturated monomer or of salts of that monomer.

2. Laminated pane according to Claim 1, characterized in that the unsaturated monomer is chosen from among the acrylic monomers and the methacrylic monomers.

3. Laminated pane according to Claim 2, characterized in that the unsaturated monomer is chosen from acrylic acid, methacrylic acid, maleic acid, fumaric acid, acrylamide, acrylonitrile, methacrylonitrile, silanes having acrylic or methacrylic groups.

4. Laminated pane according to Claim 3, characterized in that the unsaturated monomer is chosen from acrylic acid and methacryloxypropyltrimethoxysilane.

5. Laminated pane according to Claim 4, characterized in that the unsaturated monomer is acrylic acid.

6. Laminated pane according to one of Claims 1 to 5, characterized in that the adhesive film has energy-absorber properties and that it is chosen from among polyurethane, polyvinyl butyral, polyvinyl chloride.

7. Laminated pane according to Claim 6, characterized in that the adhesive film is an intermediate film of polyurethane.

8. Laminated pane according to one of Claims 1 to 6, characterized in that the adhesive film is a film of polyurethane produced by reactive casting of a mixture of an isocyanate component and of a polyol component.

9. Laminated pane according to one of Claims 1 to 8, characterized in that the unsaturated monomer is grafted by an electron bombardment of low energy.

10. Laminated pane according to Claim 9, characterized in that the grafting of the unsaturated monomer is carried out after the unsaturated monomer is brought into the presence of the film of plastics material by deposition, onto the film of plastics material, of an aqueous solution in which the content of unsaturated monomer is less than 20% and preferably less than 10% by weight.

11. Laminated pane according to one of Claims 9 to 10, characterized in that, after grafting of the unsaturated monomer or of oligomers of this monomer onto the surface of the film of plastics material, the acid groups are converted into carboxylate groups by action of a base.

## Patentansprüche

1. Verbundglas aus Glas- und/ oder Kunstoffschichten, **dadurch gekennzeichnet**, **daß** es eine Haftschicht aus Kunstoffmaterial als Sandwichschicht oder als Außenschicht aufweist, wobei diese Haftschicht ungesättigte Monomere und/oder Oligomere eines ungesättigten Monomers oder von Salzen dieses Monomers enthält, die radiochemisch durch Elektronenbeschuß auf wenigstens einer ihrer Flächen veredelt wurden.

2. Verbundglas nach Anspruch 1, **dadurch gekennzeichnet**, **daß** das ungesättigte Monomer aus Acrylmonomeren und Methacrylmonomeren ausgewählt wird.

3. Verbundglas nach Anspruch 2, **dadurch gekennzeichnet**, **daß** das ungesättigte Monomer aus Acrylsäure, Methacrylsäure, Maleinsäure, Fumarsäure, Acrylamid, Acrylnitril, Methacrylnitril, Silanen mit Acryl- oder Methacrylgruppen ausgewählt wird.

4. Verbundglas nach Anspruch 3, **dadurch gekennzeichnet**, **daß** das ungesättigte Monomer aus Acrylsäure und Methacryloxypropyltrimethoxysilan ausgewählt wird.

5. Verbundglas nach Anspruch 4, **dadurch gekennzeichnet**, **daß** das ungesättigte Monomer Acrylsäure ist.

6. Verbundglas nach einem der Ansprüche 1 bis 5, **dadurch gekennzeichnet, daß** die Haftschicht Energieabsorptionseigenschaften aufweist und daß sie aus Polyurethan, Polyvinylbutyral und Polyvinylchlorid ausgewählt wird.

7. Verbundglas nach Anspruch 6**, dadurch gekennzeichnet**, **daß** die Haftschicht eine Polyurethan-Sandwichschicht ist.

8. Verbundglas nach einem der Ansprüche 1 bis 6, **dadurch gekennzeichnet**, **daß** die Haftschicht eine durch Reaktivguß einer Mischung aus einer Isocyanatkomponente und einer Polyolkomponente gewonnene Polyurethanschicht ist.

9. Verbundglas nach einem der Ansprüche 1 bis 8, **dadurch gekennzeichnet**, **daß** das ungesättigte Monomer durch schwach energetischen Elektronenbeschuß veredelt ist.

10. Verbundglas nach Anspruch 9, **dadurch gekennzeichnet**, **daß** die Veredelung des ungesättigten Monomers nach Kontaktierung der Schicht aus Kunstoffmaterial mit dem ungesättigten Monomer durch Abscheidung einer wässrigen Lösung, deren Gehalt an ungesättigten Monomer unter 20 Gew.-% und vorzugsweise unter 10 Gew.-% liegt, auf der Schicht aus Kunstoffmaterial durchgeführt wird.

11. Verbundglas nach einem der Ansprüche 9 oder 10, **dadurch gekennzeichnet**, **daß** nach Veredelung des ungesättigten Monomers oder der Oligomere des Monomers auf der Oberfläche der Schicht aus Kunstoffmaterial die Säuregruppen in Carboxylatgruppen durch Einwirkung einer Base übergeführt werden.
